# FASCICULE DE BREVET EUROPEEN

(11) **EP 0 661 492 B1**
(45) Date de publication et mention de la délivrance du brevet: **19.11.1997**
(21) Numéro de dépôt: 94403053.5
(22) Date de dépôt: 29.12.1994
(51) Int. Cl.: F16L 47/00

(54) **Appareillage de mise en place d'une prise de branchement sur une canalisation**
Vorrichtung zum Setzen eines Rohrabzweigstückes an eine Rohrleitung
Apparatus for placing a branch pipe fitting onto a pipe

(30) Priorité: 30.12.1993 FR 9315874
(43) Date de publication de la demande: 05.07.1995
(73) Titulaire: GAZ DE FRANCE, 75017 Paris (FR)
(72) Inventeur: Lo-Pinto Jean-Marie, F-95460 Ezanville (FR); Foucart, Jacques, F-95100 Argenteuil (FR); Puyaumont, Jean-Claude, F-95410 Groslay (FR); Vilchenon, Christian, F-93800 Epinay sur Seine (FR); Vincent, Thierry, F-93800 Epinay-sur-Seine (FR)
(74) Mandataire: Thévenet, Jean-Bruno

(56) Documents cités:
- EP-A- 0 088 703
- EP-A- 0 205 696
- EP-A- 0 235 917
- FR-A- 2 620 649
- FR-A- 2 648 538

## Description

La présente invention a pour objet un appareillage de mise en place d'une prise de branchement en forme de selle sur une canalisation, notamment une canalisation de distribution de gaz, depuis la partie supérieure d'un puits de fouille creusé autour de la zone d'installation de la prise, l'appareillage comprenant des moyens de préhension de la prise et des moyens pour appliquer une force de serrage déterminée entre la prise et la canalisation, notamment en vue de rendre la prise solidaire de la canalisation lors d'une opération de soudage..

Lorsque l'on désire poser des prises de branchement ou de dérivation sur des canalisations, telles que des canalisations de distribution de gaz, ou encore des canalisations de transport d'autres types de fluides tels que de l'eau, on souhaite, notamment en milieu urbain, pouvoir réaliser un puits de fouille de dimensions limitées afin de ne pas perturber l'environnement et limiter la gêne causée à la circulation de piétons ou des véhicules. Dès lors que la section de la tranchée est limitée, il n'est pas possible pour une personne de descendre au fond de celle-ci et les opérations de mise en place de la prise doivent pouvoir s'effectuer depuis le haut du puits de fouille.

On a déjà proposé, notamment dans les documents FR-A-2 620 649 et FR-A-2 648 538 divers appareils pour effectuer un positionnement de prises de raccordement sur des canalisations et notamment exercer des efforts de serrage entre une prise et la canalisation en vue de faciliter le soudage de la prise sur la canalisation.

Lorsque la canalisation et la prise de branchement sont réalisées en matière thermofusible, tel que du polyéthylène, la solidarisation de la prise sur la canalisation est en effet avantageusement effectuée par soudage. Dans ce cas, la selle dont est pourvue la prise de branchement est équipée d'une résistance électrique à proximité immédiate de sa surface concave prévue pour venir se plaquer contre la surface convexe de la canalisation. Lorsque la prise est maintenue serrée contre la canalisation, on fait circuler un courant électrique dans la résistance électrique de la semelle de la prise, ce qui provoque la fusion de la semelle de la prise et son soudage sur la partie de la canalisation en contact avec cette semelle.

Dans les appareils de l'art antérieur décrits dans les documents précités, le positionnement d'une prise est effectuée par le fût de celle-ci, ce qui ne permet pas de donner une bonne qualité d'assemblage et ne garantit pas un soudage sûr. Or, dans le cas de canalisations, telles que les canalisations de transport de gaz, il est essentiel que le soudage ne risque pas d'induire des défauts qui provoqueraient ensuite des fuites de gaz.

Par ailleurs, les appareils de positionnement connus restent d'un maniement délicat en l'absence d'éléments de guidage ou de butée et se prêtent assez mal à des utilisations avec différents types de prises ou des canalisations de diamètre différent.

La présente invention vise à remédier aux inconvénients précités et à permettre d'effectuer de façon commode et sûre l'ensemble des opérations nécessaires pour la mise en place d'une prise de branchement sur une canalisation, depuis le haut du puits de fouille.

L'invention vise plus particulièrement à garantir un positionnement précis des différents outils utilisés lors de cette mise en place d'une prise de branchement, et un effort de serrage dont la direction et l'intensité sont optimisées lors de l'opération de solidarisation de la prise avec la canalisation.

L'invention a encore pour but de permettre une adaptation aisée à divers types de prises et de canalisations.

Ces buts sont atteints grâce à un appareillage de mise en place d'une prise de branchement en forme de selle sur une canalisation, notamment une canalisation de distribution de gaz, depuis la partie supérieure d'un puits de fouille creusé autour de la zone d'installation de la prise, l'appareillage comprenant des moyens de préhension de la prise et des moyens pour appliquer une force de serrage déterminée entre la prise et la canalisation, notamment en vue de rendre la prise solidaire de la canalisation, l'appareillage comprenant en outre :
a) un bâti comprenant un cadre vertical de support muni de glissières de guidage et comportant d'une part un ensemble de pieds télescopiques rattachés à la partie supérieure du cadre et d'autre part un dispositif d'appui basculant en forme de pelle placé à la partie inférieure du cadre, destiné à venir se positionner sous la canalisation et présentant des mouvements de pivotement entre une position verticale de repos et une position horizontale de travail qui sont commandés par une tringlerie à partir de la partie supérieure du bâti,
b) un positionneur de prise amovible comportant un fût cylindrique fendu selon l'une de ses génératrices et équipé à sa partie inférieure d'un module déconnectable de support de prise muni de moyens de retenue des rebords de la prise, le positionneur de prise comportant des moyens de guidage coopérant avec lesdites glissières de guidage lors d'une introduction par le haut dans le bâti,
c) des moyens montés sur le bâti pour exercer de façon sélective, depuis la partie supérieure du bâti, une pression vers le bas sur le module de support de prise,
d) des moyens montés sur le module amovible de support de prise pour rendre solidaires la prise et la canalisation,
e) un dispositif visseur amovible adapté pour être introduit latéralement dans le fût de positionnement d'outil et muni de moyens de guidage à l'intérieur dudit fût de positionnement d'outil, et
f) un dispositif perforateur amovible adapté pour être introduit latéralement dans le fût de positionnement d'outil et muni de moyens de guidage à l'intérieur dudit fût de positionnement d'outil, et
g) des moyens montés sur le positionneur de prise pour commander à distance la libération desdits moyens de retenue de prise.

La mise en oeuvre d'un bâti qui est fixé à la fois sur la canalisation par le dispositif d'appui basculant en forme de pelle et sur le sol en haut de la tranchée par les pieds télescopiques garantit la normalité de l'effort appliqué sur la prise par rapport à la conduite, dès lors que l'ensemble du module de support de prise est guidé dans le bâti.

Par ailleurs, le maintien de la prise par les bords et non par le fût garantit une bonne qualité d'assemblage tout en s'adaptant aux larges tolérances de distance entre les bords de prise.

Le fût de positionnement d'outil assure un guidage complet des différents accessoires, d'où une plus grande facilité d'utilisation et une sécurité accrue.

En particulier, lors du vissage ou dévissage du bouchon capuchon d'une prise, il n'existe pas de risques d'endommager les filets par une mauvaise inclinaison de l'outil. De même l'utilisation du perforateur, qui est utilisé pour percer la prise et remonter le poinçon obturateur est simplifiée.

Selon une caractéristique particulière, qui assure un positionnement optimisé du bâti par rapport à la canalisation, un premier support en vé est disposé sur la pelle pour venir se plaquer contre la partie inférieure de la canalisation et des supports en vé inversés sont montés de façon ajustable sur le cadre du bâti pour venir se placer contre la partie supérieure de la canalisation de part et d'autre de la prise à installer.

Selon un mode de réalisation particulier, les moyens de pression montés sur le bâti comprennent des doigts pivotants qui sont commandés à partir du haut par des bielles articulées sur une tige verticale et coopèrent avec des galets disposés à la base du fût de positionnement d'outil.

De préférence, l'appareillage comprend en outre des moyens de verrouillage des moyens de commande des doigts pivotants et un ressort taré incorporé à la base du fût de positionnement d'outil pour créer une pression prédéterminée sur le module de support de prise.

Selon une caractéristique avantageuse, les moyens de retenue des rebords de la prise comprennent des pièces munies à leur partie inférieure d'encoches destinées à venir s'engager sur les rebords de la prise et articulées à leur partie supérieure d'une part sur le corps fixe du module de support de prise et d'autre part sur des palonniers eux-mêmes articulés sur un cadre de commande d'ouverture ou de fermeture desdites pièces articulées.

Dans ce cas, le cadre de commande est maintenu en position de commande de fermeture des pièces articulées par une tige coulissante munie de moyens de verrouillage déverrouillables depuis le haut à l'aide d'un câble de commande.

Selon un autre aspect de l'invention, lesdits moyens pour rendre solidaires la prise et la canalisation comprennent des bornes de soudage solidaires de la prise, des cosses de soudage raccordables aux bornes de soudage et reliées par un câble à un poste de soudage placé hors du puits de fouille, et des pattes solidaires du module et comprenant une partie disposée autour d'une borne de soudage et sous la cosse de soudage pour provoquer une déconnexion automatique de la cosse de soudage lors d'un retrait du module de support de prise après mise en place de la prise sur une canalisation.

Selon un mode particulier de réalisation, ledit dispositif perforateur comprend une tige interne à la partie inférieure de laquelle est raccordée une rallonge amovible munie d'une extrémité coopérant avec un poinçon disposé dans le fût d'une prise à installer, et un tube externe concentrique à la tige interne et solidaire d'un boîtier entourant la zone de raccordement entre la tige interne et la rallonge amovible.

De façon plus spécifique, le boîtier de raccordement du perforateur est réalisé en trois parties et comprend un carter externe supérieur, une platine de base prolongée vers le bas par une partie cylindrique munie d'un filetage interne pour venir se visser sur un filetage externe du fût de la prise à mettre en place, et un corps central formant butée pour la tige interne du perforateur.

Selon un mode particulier de réalisation, le corps central du boîtier de raccordement comprend un taquet basculant coopérant avec une collerette solidaire de la tige interne du perforateur et une encoche formée dans la partie inférieure de ladite tige interne située sous ladite collerette en amont de la rallonge amovible et le corps central comprend un ergot soumis à l'action d'un ressort pour assurer le positionnement dudit corps sur la platine de base.

Par ailleurs, le dispositif perforateur comprend au moins un joint à lèvres interposé entre la rallonge amovible et le corps central, un joint torique interposé entre le corps central et la platine de base et un joint torique interposé entre la platine de base et la partie supérieure du fût sur laquelle est vissée la partie cylindrique prolongeant la platine de base vers le bas.

D'autres avantages de l'invention ressortiront de la description qui fait suite d'un mode particulier de réalisation de l'invention, donné à titre d'exemple non limitatif, en référence aux dessins annexés, sur lesquels:
- la figure 1 est une vue d'ensemble en perspective de l'appareillage selon l'invention, les différents ensembles fonctionnels étant séparés les uns des autres,
- les figures 2 et 3 sont des vues respectivement de face et de côté du bâti de l'appareillage selon l'invention, au cours d'une phase de mise en place d'un positionneur de prise de branchement sur une canalisation,
- les figures 4 et 5 sont des vues respectivement de face et de côté du bâti de l'appareillage selon l'invention, au cours d'une phase de retrait d'un positionneur de prise de branchement sur une canalisation,
- les figures 6 et 7 sont des vues en élévation d'une partie du bâti de l'appareillage de la figure 1, respectivement dans une position d'introduction ou de retrait dans un puits de fouille et dans une position de travail,
- la figure 8 est une vue en perspective d'une partie du positionneur de prise de branchement selon l'invention, placé en position de travail pour la mise en place d'une prise de branchement sur une canalisation,
- la figure 8A est une vue de détail agrandie de la figure 8 montrant les moyens de connexion électrique d'une prise de thermosoudage,
- les figures 9 et 10 sont des vues schématiques de face montrant respectivement dans une position fermée et dans une position ouverte des moyens de préhension d'une prise de branchement à l'aide d'un appareillage selon l'invention,
- la figure 11 est une vue éclatée en perspective et coupe partielle d'un dispositif de perforation de canalisation utilisable dans le cadre de la présente invention lors de la mise en place d'une prise de branchement,
- la figure 12 est une vue analogue à la figure 11 mais montre les différents éléments du dispositif de perforation emboîtés les uns dans les autres, et
- la figure 13 est une vue de détail montrant la localisation de joints dans un dispositif de perforation tel que celui des figures 11 et 12.

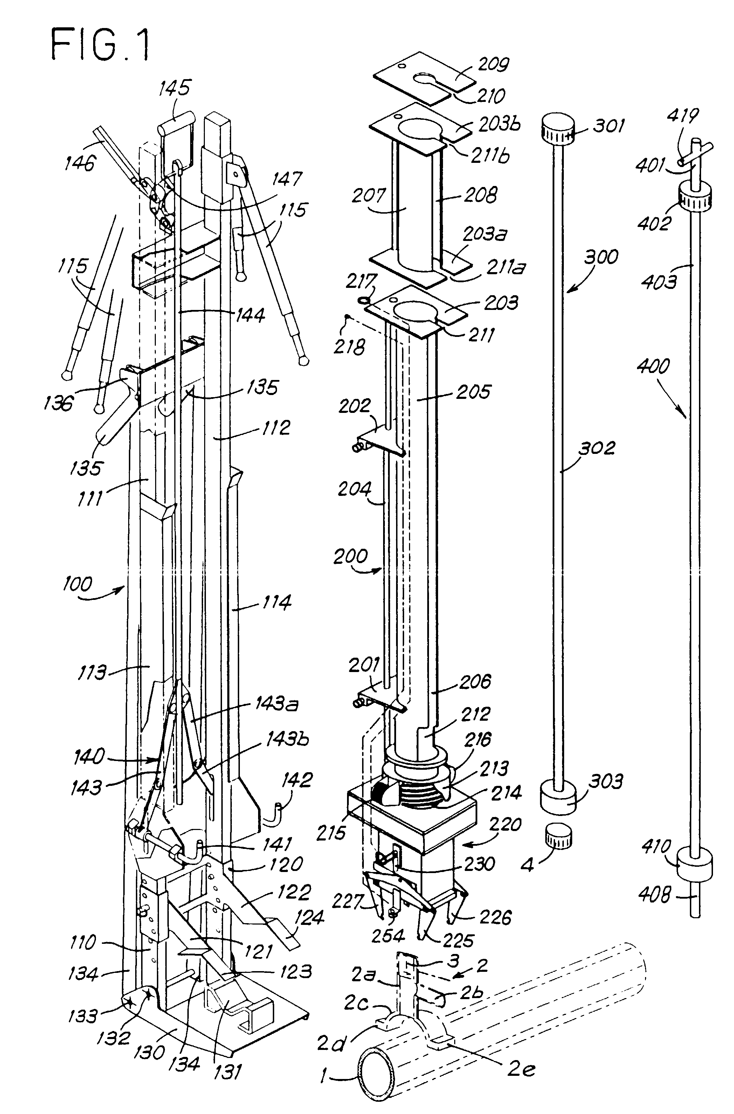

Si l'on considère en premier lieu la figure 1, on voit l'ensemble d'un appareillage conforme à l'invention destiné à être introduit dans un puits de fouille étroit formé de manière à dégager un tronçon de canalisation 1 sur lequel doit être mise en place une prise de branchement ou de dérivation 2.

L'invention s'applique particulièrement au cas de canalisations et prises réalisées en un matériau thermofusible tel que du polyéthylène.

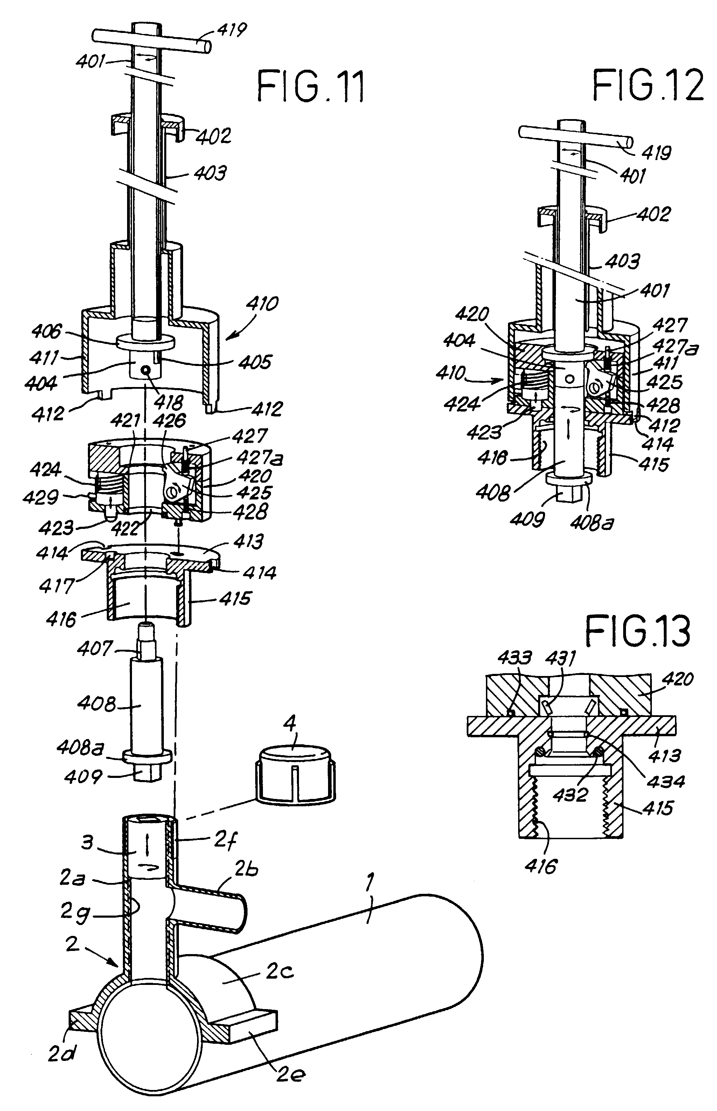

La prise de branchement 2 peut être de configurations variées mais comprend essentiellement une selle 2c de forme semi-cylindrique destinée à venir se plaquer sur la surface convexe de la canalisation 1, et comportant des rebords latéraux 2d, 2e en forme de pattes ou brides. La prise 2 comprend un fût vertical 2a dont la partie supérieure comprend un filetage externe 2f pour recevoir un bouchon 4 de fermeture de fût (figure 11). Un tube latéral de dérivation 2b débouche dans le fût 2a. Un poinçon 3, disposé dans le fût 2a, peut être vissé et dévissé dans un filetage interne 2g du fût 2a pour venir perforer la partie de canalisation 1 située sous le fût 2a après soudage de la prise 2 sur la canalisation 1 (figure 11).

L'appareillage selon l'invention représenté sur la figure 1 comprend essentiellement un bâti 100, un positionneur de prise 200 monté coulissant dans le bâti 100, et des outils tels qu'un visseur-dévisseur de bouchon 300 et un perforateur 400.

On décrira tout d'abord le bâti 100 en référence aux figures 1 à 7.

Le bâti 100 comprend un cadre vertical de support 110 comportant deux montants verticaux parallèles 111, 112 réunis par des entretoises 116. Le cadre 110 est équipé de glissières de guidage 113, 114 fixées sur les montants verticaux 111, 112 et destinées à assurer le guidage du positionneur 200 lorsque celui-ci est introduit par le haut dans le bâti 100 préalablement mis en place dans le puits de fouille (non représenté).

Des pieds télescopiques 115 sont fixés à la partie supérieure du cadre 110, sur les montants 111, 112 pour assurer une stabilisation du bâti 100 par rapport au sol lorsque le bâti est mis en place dans le puits de fouille. A la partie inférieure du cadre 110, un support 120 de positionnement sur la partie supérieure de la canalisation 1 est rapporté sur les montants 111, 112 et présente une position ajustable pour s'adapter à des canalisations de diamètres différents. Le support 120 présente deux bras latéraux 121, 122 qui se projettent latéralement par rapport au plan du cadre 110 et se terminent par des pièces de contact 123, 124 en vés inversés destinées à venir porter sur la canalisation 1 de part et d'autre de la prise 2.

Le bâti 100 comprend en outre à sa partie inférieure extrême une pelle basculante 130 destinée à venir se positionner sous la partie de la canalisation 1 devant recevoir la prise 2.

La pelle basculante 130 porte un support en vé 131 destiné à venir porter sur la surface inférieure de la canalisation 1 de façon opposée à la zone de mise en place de la prise 2.

La pelle basculante 130 est articulée d'une part autour d'un axe horizontal 132 reliant la partie inférieure des montants fixes 111, 112 et d'autre part autour d'un axe horizontal 133 reliant la partie inférieure de deux tiges de commande verticales 134 dont les extrémités supérieures sont articulées autour d'axes 138 sur des leviers de manoeuvre 135 eux-mêmes articulés autour d'axes 137 sur des supports 136 montés sur les montants 111, 112 du cadre 110.

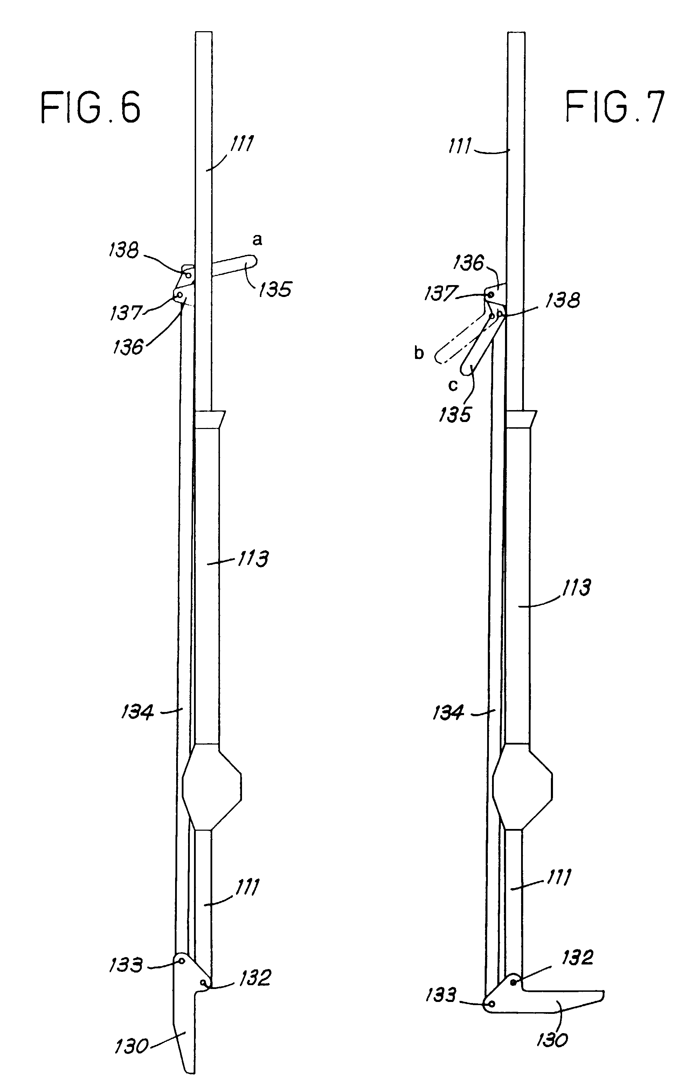

Les figures 6 et 7 montrent la pelle basculante 130 d'une part en position verticale de repos dans le prolongement du cadre 110, ce qui correspond à une position a de mise en place ou de retrait du bâti 100, d'autre part en position horizontale de travail perpendiculaire au cadre 110 pour venir en appui par la pièce en vé 131 (non représentée sur les figures 6 et 7) sous la canalisation 1 (position b de point mort et position c de verrouillage des leviers 135).

Le bâti 100 comprend encore un mécanisme 140 destiné à exercer un effort de serrage vers le bas sur le positionneur de prise 200 lorsque celui-ci est introduit dans le bâti 100.

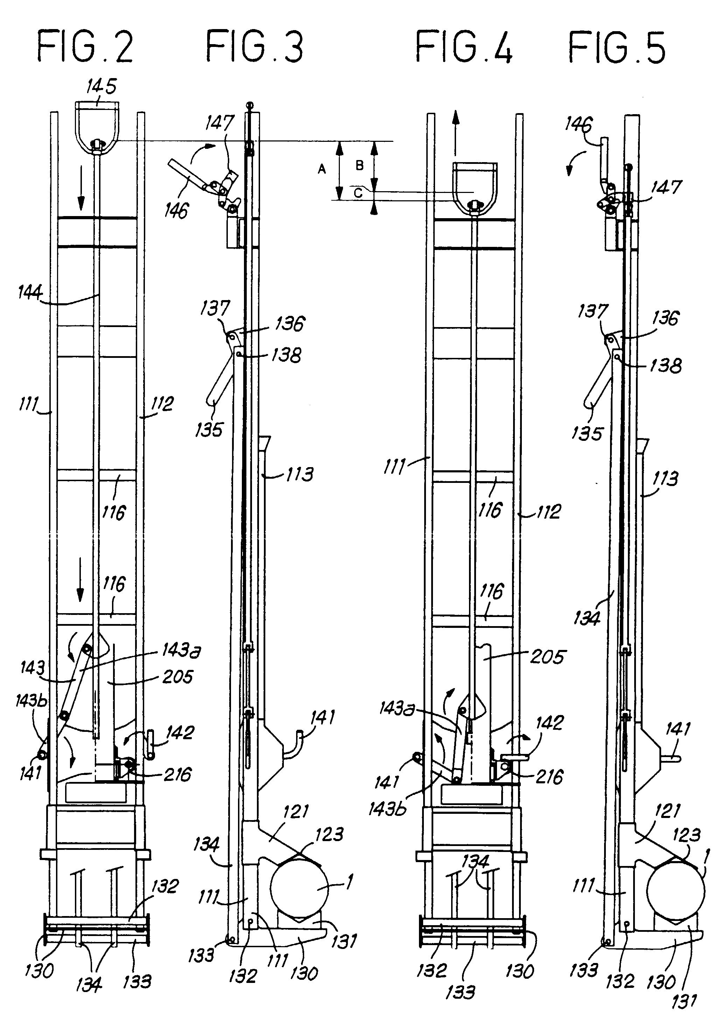

Ce mécanisme de serrage 140 comprend essentiellement une tige verticale 144 pouvant être déplacée vers le haut ou vers le bas à l'aide d'une poignée 145 située à sa partie supérieure, la partie inférieure de la tige de commande 144 étant articulée sur deux paires 143 de tiges articulées 143a, 143b actionnant le basculement de deux doigts 141, 142 disposés à l'extrémité de tiges horizontales se projetant latéralement perpendiculairement au plan du cadre 110. Les doigts 141, 142 constituant les extrémités recourbées des tiges horizontales en forme de cannes peuvent être placés en position de repos verticale (position haute de la poignée 145 sur les figures 2 et 3) ou en position de travail horizontale (position basse de la poignée 145 sur les figures 4 et 5). En position de travail, les doigts 141, 142 viennent porter sur des galets 215, 216 montés à la partie inférieure du corps du positionneur de prise 200.

Une manette 146, munie d'un cran de verrouillage 147, est articulée à la partie supérieure du cadre 110 et peut venir verrouiller la poignée 145 dans une position extrême inférieure, complétant ainsi le déplacement manuel B de la poignée 145 par un déplacement supplémentaire C dû à l'action de la manette 146, pour définir un déplacement total A (figure 4) dans lequel les tiges articulées 143a viennent verrouiller la position horizontale des doigts 141, 142 et exercer un effort supplémentaire sur le corps du positionneur 200 grâce à un ressort taré 214 disposé dans ce corps entre le carter 213 supportant les galets 215, 216 et la platine de support d'un module 220 de support de prise qui sera décrit plus loin.

Le bâti 100, qui peut être positionné de façon très précise et stable entre le sol par les pieds télescopiques 115 et la canalisation 1, par les appuis 131, 123, 124, peut à la fois assurer un guidage aisé du positionneur 200 dans les glissières 113, 114 et exercer une pression de serrage optimisée et prédéterminée sur le module 220 de support de prise.

On décrira maintenant en référence aux figures 1, 8, 8A et 9, 10 le positionneur de prise 200 coulissant dans le bâti 100.

Le positionneur 200 comprend essentiellement un fût 205 de positionnement d'outil constitué par une longue pièce cylindrique verticale fendue selon l'une de ses génératrices 206 pour permettre l'introduction latérale d'une tige d'outil 302, 403 et présentant une ouverture inférieure 212 plus importante pour le passage d'un outil 303, 410 placé à l'extrémité inférieure de la tige d'outil 302, 403.

Des plaques de guidage 201, 202 reliées par une tige verticale 204 permettent un positionnement précis et un guidage du fût 205 par rapport au bâti 100, des galets portés par les plaques 201, 202 étant engagés dans les glissières 113, 114 du bâti 100.

Des rallonges 207 présentant une fente 208 selon une génératrice et munies de plaques d'extrémité 203a, 203b munies de fentes 211a, 211b dans le prolongement de la fente 208 peuvent être rapportées à la partie supérieure du fût de base 205 lorsque la canalisation 1 est située à une profondeur plus importante que la normale. La plaque inférieure d'une rallonge 207 peut se fixer facilement sur la plaque supérieure d'extrémité 203, munie d'une fente 211, située sur le dessus du fût 205. Une plaque terminale 209 munie d'une fente 210 et d'une ouverture plus petite que les boutons 301, 402 de manoeuvre d'outils peut être rapportée au sommet du fût 205 ou de la rallonge 207 pour servir de retenue pour ces outils.

Le corps du positionneur 200 se prolonge, sous le fût cylindrique fendu 205, par un carter 213 sur lequel sont montés des galets 215, 216 à axe horizontal sur lesquels peuvent venir s'appuyer les doigts 141, 142 du mécanisme 140 de serrage monté sur le bâti 100. Un ressort taré 214 est placé dans le carter 213 au-dessus d'une plaque terminale inférieure 213a pour permettre l'application d'un effort prédéterminé, par exemple de l'ordre de 1500 N, lorsque la manette de verrouillage 146 a verrouillé la poignée 145 en position basse extrême.

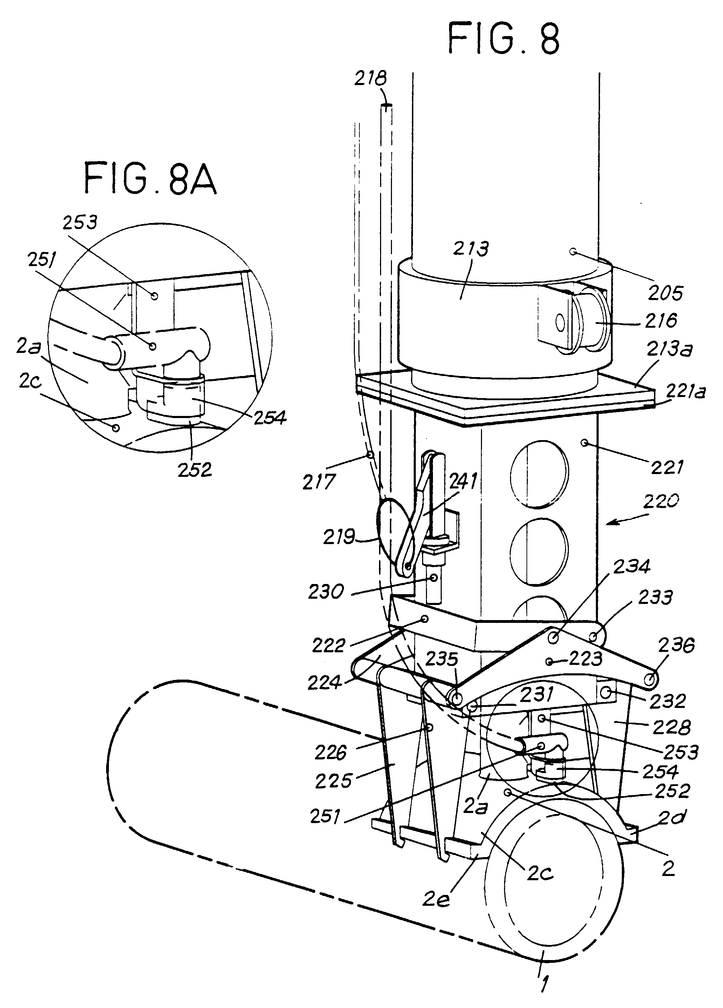

Un module amovible 220 de support de prise est monté par une plaque terminale 221a sur la plaque terminale inférieure 213a du corps du positionneur 200. Le module amovible 220 peut être adapté à différents types de prises mais présente une structure d'ensemble type qui sera décrite plus particulièrement en référence à la figure 8.

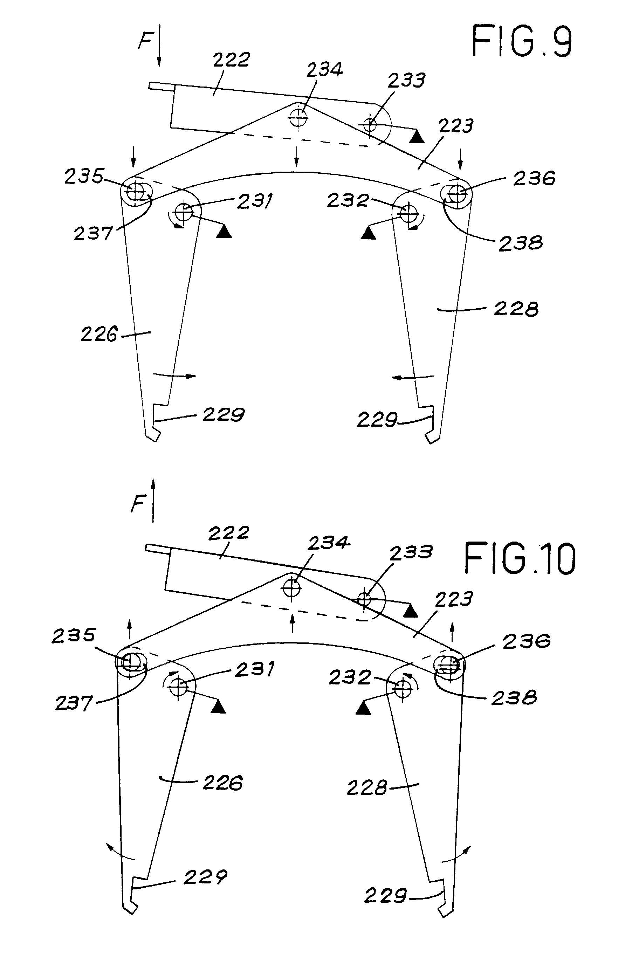

Le module amovible 220 comprend essentiellement un corps 221, par exemple parallélépipédique, sur lequel est monté un cadre actionneur 222 articulé autour de deux axes horizontaux 233. Le cadre 222 supporte deux palonniers 223, 224 articulés sur le cadre 222 autour de deux axes horizontaux alignés 234. Deux paires de pièces triangulaires 225, 226 et 227, 228 formant mors sont articulées d'une part autour d'axes horizontaux 231, 232 sur l'extrémité inférieure du corps 221 du module de préhension 220, d'autre part autour d'axes horizontaux 235, 236 supportés par les extrémités des deux bras des palonniers 223, 224. Les mors 225, 226 respectivement 227, 228 ou les palonniers 223, 224 présentent des ouvertures 237 respectivement 238 plus grandes que les axes d'articulation 235 respectivement 236 autour des palonniers afin de permettre l'écartement ou la fermeture des mors 225 à 228 selon la position conférée aux palonniers 223, 224 par le cadre actionneur 222 (figures 9 et 10). Les mors 225 à 228 présentent à leur partie inférieure des échancrures 229 qui, en position fermée, viennent s'engager dans les brides 2d, 2e de la prise 2 à placer sur une canalisation 1 (figure 8).

Avant l'insertion du positionneur 200 dans la bâti 100, la prise 2 est placée sous le module de positionnement 220, les mors 225 à 228 étant en position ouverte, puis le cadre actionneur 222 est abaissé pour amener les mors 225 à 228 en prise avec les rebords 2d, 2e de la prise, assurant un positionnement sûr sans action sur le fût 2a de la prise.

Le cadre actionneur 222 peut lui-même être actionné par un mécanisme du type "sauterelle", avec une tige coulissante 230 qui peut être amenée en position basse de fermeture des mors 225 à 228 par l'abaissement d'un levier 241. Un anneau 219 fixé sur le levier 241 permet, par l'intermédiaire d'un câble 217, de commander depuis le haut du positionneur l'ouverture des mors 225 à 228 et la libération de la prise 2 lorsque les opérations de mise en place de soudage, de perçage et de vissage d'un bouchon sont terminées.

La figure 8A montre un exemple possible de connexion électrique sur des plots de soudage 252 solidaires de la prise 2, permettant le soudage de cette prise par thermofusion lorsqu'un courant électrique est appliqué sur ces plots de soudage 252 reliés à une résistance électrique incorporée dans la selle 2c de la prise.

Les cosses de soudage 251, reliées par un câble 218 à l'installation de soudage placée hors de la tranchée, sont fixées sur les plots de soudage 252 avant l'insertion du positionneur 200 dans le bâti 100. Des pattes 253 de retrait de cosse de soudage sont fixées sur le corps 221 du module 220 et présentent une partie annulaire 254 qui est placée autour du plot 252 et de la cosse 251 de soudage lors de la connexion, ce qui permet une déconnexion automatique des cosses de soudage 251 lorsque le module 220 est retiré par le haut à la fin des opérations de mise en place de la prise 2.

Si l'on revient à la figure 1, on voit un exemple de visseur-dévisseur 300 comportant une tête ou molette 301 d'actionnement, une tige 302 et un outil 303 de saisie d'un bouchon de prise 4. Le visseur-dévisseur 300 est introduit latéralement dans le positionneur 200 lorsque celui-ci est en place dans le bâti 100 lui-même installé dans le puits de fouille, pour dévisser le bouchon de prise 4 après une opération de soudage de la prise 2 sur la canalisation 1 et avant une opération de perforation de la canalisation, ou encore pour revisser le bouchon de prise 4 après une opération de perforation et avant une mise en service du branchement. On notera que le guidage du visseur-dévisseur 300 à l'intérieur du fût 205 garantit un bon positionnement de cet outil.

On décrira maintenant en référence aux figures 1 et 11 à 13 un exemple de perforateur 400 particulièrement adapté à l'appareillage selon l'invention.

Un tel perforateur 400 comprend essentiellement une tige interne 401 pouvant être entraînée en rotation par une barre de manoeuvre 419 située à la partie supérieure de cette tige, un tube externe 403 coaxial à la tige 401 et pouvant être entraîné en rotation par une molette 402 située à la partie supérieure du perforateur sous la barre 419, et un boîtier de raccordement 410 monté sur le tube externe 403 à la partie inférieure de celui-ci et portant une rallonge amovible 408 reliée, à l'intérieur du boîtier 410, à l'extrémité inférieure de la tige interne 401. La rallonge 408 est elle-même destinée à venir en prise avec le poinçon 3 disposé dans le fût 2a de la prise 2. Des moyens sont prévus à l'intérieur du boîtier 410 pour former des butées automatiques lors des opérations de perçage.

Si l'on considère plus particulièrement les figures 11 à 13, on voit que la tige interne 401 présente à sa partie inférieure une collerette d'arrêt 406 prolongée vers le bas par une pièce femelle 404 prévue pour recevoir l'extrémité mâle supérieure 407 d'accouplement d'une rallonge 408 présentant elle-même à sa partie inférieure un carré 409 d'entraînement du poinçon 3 intégré dans le fût 2a de la prise 2. La rallonge 408 est bloquée en position sur le raccord 404 par une vis 418. Le raccord 404 comprend en outre une encoche 405 permettant l'arrêt de la rotation de la tige 401 lorsque celle-ci a atteint une position prédéterminée pour laquelle la collerette 406 est pratiquement en butée sur un épaulement 421.

Le boîtier de positionnement 410 comprend essentiellement un carter supérieur de boîtier 411 qui peut être muni à sa partie inférieure de par exemple trois créneaux de positionnement 412 venant se placer dans des encoches correspondantes 414 formées à la partie périphérique d'une platine inférieure 413 prolongée vers le bas par une partie cylindrique 415 munie d'un filetage interne 416 et pouvant se visser sur le filetage externe 2f du fût 2a de la prise 2 à la place d'un bouchon de prise 4.

Un corps 420 comprenant des moyens de butée est incorporé à l'intérieur du carter supérieur 411 et repose sur la platine inférieure 413. Le corps 420 qui peut être réalisé en plusieurs parties comprend un épaulement 421 formant butée pour la collerette 406 de la tige interne 401. Le corps 420 comme la platine 413 sont naturellement percés d'une ouverture centrale dans laquelle pénètrent la partie inférieure 404 de la tige 401 et la rallonge 408. Un ergot 423 débouchant sur la face inférieure du corps 420 et associé à un ressort 424 ainsi qu'à un cran 429 peut venir se positionner dans une encoche 417 de réception formée dans la platine 413 pour déterminer le positionnement correct du corps 420 qui incorpore un taquet 425 pouvant basculer autour d'un axe horizontal et dont le nez 426 est destiné à coopérer avec l'encoche 405 formée dans la partie inférieure 404 de la tige 401. Le taquet 425 présente une position de repos définie par une vis de butée 428 et coopère avec un poussoir 427 muni d'un ressort 427a pour ramener le taquet 425 dans sa position de repos lorsque la collerette 406 est en dehors du corps 420 au-dessus de l'épaulement 421. Au contraire le taquet 425 entre en fonction lorsque la collerette 406 vient faire basculer le nez 426 du taquet 425 vers l'encoche 405 bloquant la rotation de la tige 401.

Comme on peut le voir sur la figure 13, le dispositif perforateur 400 comprend à l'intérieur du boîtier 410 au moins un joint à lèvres 431 interposé entre la rallonge amovible 408 et le corps central 420, un joint torique 433 interposé entre le corps central 420 et la platine de base 413 et un joint torique 432 interposé entre la platine de base 413 et la partie supérieure du fût 2a sur laquelle est vissée la partie cylindrique 415. Un joint torique supplémentaire 434 peut être interposé entre la platine 413 et la rallonge 408 (non représentée sur la figure 13).

Le perforateur 400 selon l'invention peut s'adapter à des canalisations notamment en polyéthylène présentant une large gamme de diamètres, par exemple d'une soixantaine de millimètres à environ 200 mm. La fixation du perforateur 400 par la partie cylindrique filetée 415 n'altère pas le filetage 2f de la prise 2 du fait du guidage du perforateur 400 dans le fût de positionnement 205.

Par l'usage de rallonges 408 adaptées aux différents types de prises, le dispositif 410 assure des butées précises et fiables, d'une part en fin de poinçonnage et d'autre part en remontée, ce qui garantit tout risque de fuite de gaz au niveau du bouchon de raccordement 415, des joints toriques 432, 434 et du joint à lèvres 431 sur l'arbre tournant.

La mise en oeuvre du dispositif perforateur 400 peut être la suivante :

On monte d'abord le bouchon de raccordement 413, 415 correspondant à la prise considérée 2 sur le corps 420 par rapport à des pions de centrage et de maintien et par rotation relative des pièces on provoque par le cran 429 et le ressort 424 la mise en place du doigt 423 dans l'encoche correspondante 417 du bouchon de raccordement 413, 415, ce qui garantit un bon positionnement.

Après insertion de la rallonge appropriée 408 dans l'accouplement 404 solidaire de la tige 401, on serre la vis 418.

Le dispositif perforateur 400 est alors descendu dans la fouille et introduit dans la fente 206 du fût 205.

Au contact de la prise 2, on visse le bouchon de raccordement 413, 415 par l'intermédiaire de la molette 402 qui entraîne le tube externe 403 et le carter supérieur 411 du boîtier 410 en prise avec le bouchon 413, 415. Simultanément, le carré 409 de la rallonge 408 est positionné dans le poinçon 3.

Après la fin du vissage de l'élément cylindrique 415, le poinçon 3 est entraîné en rotation à l'aide de la barre 419 solidaire de la tige 401, qui peut être réalisée sous une forme tubulaire. En fin de cycle la collerette 406 fait basculer le taquet 425 dont le nez 426 rentre dans la cannelure 405 de la pièce d'accouplement 404. Les éléments 419, 401, 404, 408 et 3 étant bloqués en rotation, le perçage est terminé.

Pour remonter le poinçon 3, la tige 401 est tirée légèrement vers le haut, de sorte que le taquet 425 se libère de la cannelure 405 sous l'action du poussoir 427 et de son ressort 427a. Par rotation de la tige 401 en sens inverse de l'opération de perçage, en fin de course, la collerette 408a de la rallonge 408 vient elle-même en butée à l'intérieur de la partie cylindrique 415 du bouchon de raccordement. Le poinçon 3 affleure alors le sommet de la prise 2. L'ensemble du bouchon de raccordement (boîtier 410) peut être dévissé par action sur la molette 402 seule, le tube 401 étant maintenu en position.

Le dispositif perforateur 400 peut alors être ôté du fût 205 par la fente 206 et être remonté pour permettre l'introduction dans le fût 205 d'un dispositif 300 visseur-dévisseur pour remettre en place un bouchon de prise 4.

A la fin d'une opération de revissage d'un bouchon 4 sur la prise définitivement soudée et mise en communication avec la canalisation 1, on procède au déverrouillage des mors 225 à 228 du module porte-prise 220, par traction sur le câble 217, pour libérer la prise 2, puis on agit sur la manette 146 et la poignée 145 pour déverrouiller et retirer le positionneur 200. Les pieds télescopiques 115 peuvent alors être retirés, la pelle 130 est ramenée en position verticale par les leviers 135 et le bâti 100 et peut être remonté hors du puits de fouille.

## Revendications

1. Appareillage de mise en place d'une prise de branchement (2) en forme de selle sur une canalisation (1), notamment une canalisation de distribution de gaz, depuis la partie supérieure d'un puits de fouille creusé autour de la zone d'installation de la prise (2), l'appareillage comprenant des moyens de préhension de la prise et des moyens pour appliquer une force de serrage déterminée entre la prise (2) et la canalisation (1), notamment en vue de rendre la prise solidaire de la canalisation, lors d'une opération de soudage de la prise (2) sur la canalisation (1), l'appareillage comprenant en outre :
a) un bâti (100) comprenant un cadre vertical de support (110) muni de glissières de guidage (113, 114) et comportant d'une part un ensemble de pieds télescopiques (115) rattachés à la partie supérieure du cadre (110) et d'autre part un dispositif d'appui basculant (130) en forme de pelle placé à la partie inférieure du cadre (110), destiné à venir se positionner sous la canalisation (1) et présentant des mouvements de pivotement entre une position verticale de repos et une position horizontale de travail qui sont commandés par une tringlerie à partir de la partie supérieure du bâti (100),
b) un positionneur de prise (200) amovible comportant un fût cylindrique (205) fendu selon l'une de ses génératrices (206) et équipé à sa partie inférieure d'un module déconnectable (220) de support de prise muni de moyens (225 à 228) de retenue des rebords (2d, 2e) de la prise, le positionneur de prise (200) comportant des moyens de guidage (201, 202, 203) coopérant avec lesdites glissières de guidage (113, 114) lors d'une introduction par le haut dans le bâti (100),
c) des moyens (140) montés sur le bâti (100) pour exercer de façon sélective, depuis la partie supérieure du bâti, une pression vers le bas sur le module (220) de support de prise,
d) des moyens (251 à 254) montés sur le module amovible (220) de support de prise pour rendre solidaires la prise (2) et la canalisation (1),
e) un dispositif visseur (300) amovible adapté pour être introduit latéralement dans le fût (205) de positionnement d'outil et muni de moyens de guidage (303) à l'intérieur dudit fût (205) de positionnement d'outil, et
f) un dispositif perforateur (400) amovible adapté pour être introduit latéralement dans le fût (205) de positionnement d'outil et muni de moyens de guidage (410) à l'intérieur dudit fût (205) de positionnement d'outil, et
g) des moyens (217 à 219, 230) montés sur le positionneur de prise (200) pour commander à distance la libération desdits moyens de retenue de prise (225-228).

2. Appareillage selon la revendication 1, caractérisé en ce qu'un premier support en vé (131) est disposé sur la pelle (130) pour venir se plaquer contre la partie inférieure de la canalisation (1) et en ce que des supports en vé inversés (123, 124) sont montés de façon ajustable sur le cadre du bâti (100) pour venir se placer contre la partie supérieure de la canalisation (1) de part et d'autre de la prise à installer (2).

3. Appareillage selon la revendication 1 ou la revendication 2, caractérisé en ce que les moyens (140) de pression montés sur le bâti (100) comprennent des doigts pivotants (141, 142) qui sont commandés à partir du haut par des bielles (143) articulées sur une tige verticale (144) et coopèrent avec des galets (215, 216) disposés à la base du fût (205) de positionnement d'outil.

4. Appareillage selon la revendication 3, caractérisé en ce qu'il comprend en outre des moyens (146, 147) de verrouillage des moyens (143, 144) de commande des doigts pivotants (141, 142) et un ressort taré (214) incorporé à la base du fût (205) de positionnement d'outil pour créer une pression prédéterminée sur le module (210) de support de prise.

5. Appareillage selon l'une quelconque des revendications 1 à 4, caractérisé en ce que les moyens de retenue des rebords (2d, 2e) de la prise (2) comprennent des pièces (225 à 228) munies à leur partie inférieure d'encoches (228) destinées à venir s'engager sur les rebords (2d, 2e) de la prise (2) et articulées à leur partie supérieure d'une part sur le corps fixe (221) du module (220) de support de prise et d'autre part sur des palonniers (223, 224) eux-mêmes articulés sur un cadre (222) de commande d'ouverture ou de fermeture desdites pièces articulées (225 à 228).

6. Appareillage selon la revendication 5, caractérisé en ce que le cadre de commande (222) est maintenu en position de commande de fermeture des pièces articulées (225 à 228) par une tige coulissante (230) munie de moyens de verrouillage (241) déverrouillables depuis le haut à l'aide d'un câble de commande (217).

7. Appareillage selon l'une quelconque des revendications 1 à 6, caractérisé en ce que lesdits moyens (251 à 254) pour rendre solidaires la prise (2) et la canalisation comprennent des bornes de soudage (252) solidaires de la prise (2), des cosses de soudage (251) raccordables aux bornes de soudage (252) et reliées par un câble (218) à un poste de soudage placé hors du puits de fouille, et des pattes (253, 254) solidaires du module (220) et comprenant une partie (254) disposée autour d'une borne de soudage (252) et sous la cosse de soudage (251) pour provoquer une déconnexion automatique de la cosse de soudage (251) lors d'un retrait du module (220) de support de prise après mise en place de la prise (2) sur une canalisation (1).

8. Appareillage selon l'une quelconque des revendications 1 à 7, caractérisé en ce que ledit dispositif perforateur (400) comprend une tige interne (401) à la partie inférieure de laquelle est raccordée une rallonge amovible (408) munie d'une extrémité (409) coopérant avec un poinçon (3) disposé dans le fût (2a) d'une prise (2) à installer, et un tube externe (403) concentrique à la tige interne (401) et solidaire d'un boîtier (410) entourant la zone de raccordement entre la tige interne (401) et la rallonge amovible (408).

9. Appareillage selon la revendication 8, caractérisé en ce que le boîtier de raccordement (410) du perforateur (400) est réalisé en trois parties et comprend un carter externe supérieur (411), une platine de base (413) prolongée vers le bas par une partie cylindrique (415) munie d'un filetage interne pour venir se visser sur un filetage externe (2f) du fût (2a) de la prise (2) à mettre en place, et un corps central (420) formant butée pour la tige interne (401) du perforateur.

10. Appareillage selon la revendication 9, caractérisé en ce que le corps central (420) du boîtier de raccordement (410) comprend un taquet basculant (425) coopérant avec une collerette (406) solidaire de la tige interne (401) du perforateur (400) et une encoche (405) formée dans la partie inférieure (404) de ladite tige interne (401) située sous ladite collerette (406) en amont de la rallonge amovible (408).

11. Appareillage selon la revendication 9 ou 10, caractérisé en ce que le corps central (420) comprend un ergot (423) soumis à l'action d'un ressort (424) pour assurer le positionnement dudit corps sur la platine de base (413).

12. Appareillage selon l'une quelconque des revendications 9 à 11, caractérisé en ce que le dispositif perforateur (400) comprend au moins un joint à lèvres (431) interposé entre la rallonge amovible (408) et le corps central (420), un joint torique (433) interposé entre le corps central (420) et la platine de base (413) et un joint torique (432) interposé entre la platine de base (413) et la partie supérieure du fût (2a) sur laquelle est vissée la partie cylindrique (415) prolongeant la platine de base (413) vers le bas.

13. Appareillage selon l'une quelconque des revendications 1 à 12, caractérisé en ce qu'il est appliqué à la mise en place d'une prise de branchement (2) en polyethylène fixée par thermosoudage sur une canalisation (1) en polyethylène.

## Patentansprüche

1. Vorrichtung zum Anbringen eines sattelförmigen Rohrabzweigstücks (2) an einer Rohrleitung (1), insbesondere einer Rohrleitung zum Gasanschluß, vom oberen Abschnitt einer Ausschachtung her, die rund um die Anbringungszone des Rohrabzweigstücks (2) vertieft ist, wobei die Vorrichtung Mittel zum Greifen des Rohrabzweigstückes sowie Mittel zum Aufbringen einer bestimmten Klemmkraft zwischen dem Rohrabzweigstück (2) und der Rohrleitung (1) aufweist, insbesondere in Hinblick auf die feste Verbindung des Rohrabzweigstücks mit der Rohrleitung während des Anschweißvorganges des Rohrabzweigstücks (2) an die Rohrleitung (1), wobei die Vorrichtung ferner die folgenden Merkmaie aufweist:
a) ein Gestell (100) mit einem vertikalen Tragrahmen (110), der mit Gleitführungen (113, 114) versehen ist und einerseits eine Gruppe aus telesopartigen Füßen (115) aufweist, die am oberen Teil des Rahmens (110) befestigt sind, sowie andererseits eine schwenkbare, löffelförmige Anlagevorrichtung (130), die am unteren Abschnitt des Rahmens (110) angeordnet ist, dazu bestimmt ist, unter der Rohrleitung (1) angeordnet zu werden, und Schwenkbewegungen zwischen einer vertikalen Ruhelage und einer horizontalen Arbeitslage darbietet, die durch ein Gestänge vom oberen Abschnitt des Gestells (100) her gesteuert sind,
b) eine entfernbare Rohrabzweigstück-Positionierungseinrichtung (200), die einen zylindrischen Schaft (205) aufweist, der längs einer seiner Erzeugenden geschlitzt (206) ist und an seinem unteren Abschnitt mit einem abkoppelbaren Modul (220) zum Tragen des Rohrabzweigstücks ausgestattet ist, das mit Mitteln (225 bis 228) zum Halten der nach außen gebogenen Ränder (2d, 2e) des Rohrabzweigstücks versehen ist, wobei die Rohrabzweigstück-Positionierungseinrichtung (200) Führungsmittel (201, 202, 203) aufweist, die mit den genannten Gleitführungen (113, 114) während eines Einführens von oben her in das Gestell (100) zusammenwirken,
c) Mittel (140), die auf dem Gestell (100) angebracht sind, um in selektiver Weise vom oberen Abschnitt des Gestells her einen nach unten gerichteten Druck auf das Modul (220) zum Tragen des Rohrabzweigstücks auszuüben,
d) Mittel (251 bis 254), die auf dem abnehmbaren Modul (220) zum Tragen des Rohrabzweigstücks angebracht sind, um das Rohrabzweigstück (2) und die Rohrleitung (1) fest zu verbinden,
e) eine abnehmbare Windevorrichtung (300), die dazu eingerichtet ist, seitlich in den Werkzeug-Positionierungsschäft (205) eingeführt zu werden und mit Mitteln (303) zur Führung im Inneren des genannten Werkzeug-Positionierungsschaftes (205) ausgestattet ist, und
f) eine abnehmbare Perforierungseinrichtung (400), die zum seitlichen Einführen in den Werkzeug-Positionierungsschaft (205) eingerichtet ist und mit Mitteln (410) zur Führung im Inneren des genannten Werkzeug-Positionierungsschaftes (205) versehen ist, und
g) Mittel (217 bis 219, 230), die auf der Rohrabzweigstück-Positionierungseinrichtung (200) angebracht sind, um die Freisetzung der genannten Mittel (225 - 228) zum Halten des Rohrabzweigstücks zu steuern.

2. Vorrichtung nach Anspruch 1, dadurch gekennzeichnet, daß ein erster, V-förmiger Träger (131) auf dem Löffel (130) angeordnet ist, um sich gegen den unteren Abschnitt der Rohrleitung (1) anzulegen, und daß umgekehrt-V-förmige Träger (123, 124) einstellbar auf dem Rahmen des Gestells (100) angebracht sind, um sich gegen den oberen Abschnitt der Rohrleitung (1) beiderseits des einzubauenden Rohrabzweigstücks (2) anzulegen.

3. Vorrichtung nach Anspruch 1 oder Anspruch 2, dadurch gekennzeichnet, daß die Druckmittel (140), die auf dem Gestell (100) angebracht sind, schwenkbare Finger (141, 142) aufweisen, die von oben her durch Verbindungsglieder (143) gesteuert sind, die an einer vertikalen Stange (144) gelenkig angebracht sind und mit Rollen (215, 216) zusammenwirken, die an der Unterseite des Werkzeug-Positionierungsschaftes (205) angeordnet sind.

4. Vorrichtung nach Anspruch 3, dadurch gekennzeichnet, daß sie außerdem Mittel (146, 147) zur Verriegelung der Mittel (143, 144) zur Steuerung der schwenkbaren Finger (141, 142) aufweist, sowie eine austarierte Feder (214), die an der Unterseite des Werkzeug-Positionierungsschaftes (205) aufgenommen ist, um einen vorbestimmten Druck auf das Modul (210) zum Tragen des Rohrabzweigstückes aufzubringen.

5. Vorrichtung nach irgendeinem der Ansprüche 1 bis 4, dadurch gekennzeichnet, daß die Mittel zum Halten der nach außen gebogenen Ränder (2d, 2e) des Rohrabzweigstücks (2) Teile (225 bis 228) aufweisen, die an ihrem unteren Abschnitt mit Aussparungen (228) versehen sind, die dazu bestimmt sind, in Eingriff auf den nach außen gebogenen Rändern (2d, 2e) des Rohrabzweigstücks (2) zu gelangen, und an ihrem oberen Abschnitt einerseits am festen Körper (221) des Moduls (220) zum Tragen des Rohrabzweigstücks und andererseits an Schwenkhebeln (223, 224) schwenkbar angebracht sind, die ihrerseits schwenkbar an einem Rahmen (222) zum Steuern des öffnens oder des Schließens der genannten, gelenkig gelagerten Teile (225 bis 228) angebracht sind.

6. Vorrichtung nach Anspruch 5, dadurch gekennzeichnet, daß der Steuerrahmen (222) in der Lage zum Steuern des Schliessens der gelenkig gelagerten Teile (225 bis 228) durch eine verschiebliche Stange (230) gehalten ist, die mit Verriegelungsmitteln (241) versehen ist, die von oben her mit Hilfe eines Steuerseils (217) entriegelbar sind.

7. Vorrichtung nach igendeinem der Ansprüche 1 bis 6, dadurch gekennzeichnet, daß die genannten Mittel (251 bis 254) zum festen Verbinden des Rohrabzweigstücks (2) mit der Rohrleitung Schweißklemmen (252) aufweisen, die fest mit dem Rohrabzweigstück (2) verbunden sind, Schweißösen (251), die mit den Schweißklemmen (252) verbindbar sind und durch ein Kabel (218) mit einem Schweißgerät verbunden sind, das ausserhalb der Ausschachtung angeordnet ist, sowie Befestigungen (253, 254), die fest mit dem Modul (220) verbunden sind und einen Abschnitt (254) aufweisen, der rund um eine Schweißklemme (252) und unter der Schweißöse (251) angeordnet ist, um ein automatisches Lösen des Anschlusses der Schweißöse (251) während des Zurückziehens des Moduls (220) zum Tragen des Rohrabzweigstücks nach der Anbringung des Rohrabzweigstücks (2) auf einer Rohrleitung hervorzurufen.

8. Vorrichtung nach irgendeinem der Ansprüche 1 bis 7, dadurch gekennzeichnet, daß die genannte Perforierungsvorrichtung (400) eine innere Stange (401) aufweist, mit deren unterem Abschnitt ein abnehmbares Verlängerungsstück (408) verbunden ist, das mit einem Ende (409) versehen ist, das mit einem Lochstempel (3) zusammenwirkt, der im Schaft (2a) eines einzubauenden Rohrabzweigstücks (2) angeordnet ist, sowie ein äußeres Rohr (403), das zur inneren Stange (401) konzentrisch ist und fest mit einem Gehäuse (410) verbunden ist, das die Verbindungszone zwischen der inneren Stange (401) und dem abnehmbaren Verlängerungsstück (408) umgibt.

9. Vorrichtung nach Anspruch 8, dadurch gekennzeichnet, daß das Verbindungsgehäuse (410) der Perforierungseinrichtung (400) aus drei Teilen ausgeführt ist und einen oberen Außenkasten (411), eine Bodenplatte (413), die nach unten durch einen zylindrischen Abschnitt (415) verlängert ist, der mit einem Innengewinde versehen ist, um auf ein Außengewinde (2f) des Schaftes (2a) des Rohrabzweigstücks (2) aufgeschraubt zu werden, das einzusetzen ist, sowie einen mittleren Körper (420) aufweist, der einen Anschlag für die innere Stange (401) der Perforierungseinrichtung bildet.

10. Vorrichtung nach Anspruch 9, dadurch gekennzeichnet, daß der mittlere Körper (420) des Verbindungsgehäuses (410) einen schwenkbaren Mitnehmer (425), der mit einem Flansch (406) zusammenwirkt, der fest mit der inneren Stange (401) der Perforierungseinrichtung (400) verbunden ist, sowie eine Aussparung (405) aufweist, die im unteren Abschnitt (405) der genannten inneren Stange (401) ausgebildet ist und unter dem genannten Flansch (406) oberhalb des abnehmbaren Verlängerungsstücks (408) gelegen ist.

11. Vorrichtung nach Anspruch 9 oder 10, dadurch gekennzeichnet, daß der mittlere Körper (420) eine Nase (423) aufweist, die der Wirkung einer Feder (424) unterzogen ist, um die Positionierung des genannten Körpers auf der Bodenplatte (413) sicherzustellen.

12. Vorrichtung nach irgendeinem der Ansprüche 9 bis 11, dadurch gekennzeichnet, daß die Perforierungsvorrichtung (400) mindestens eine Lippendichtung (431), die zwischen dem abnehmbaren Verlängerungsstück (408) und dem mittleren Körper (420) angeordnet ist, eine Ringdichtung (433), die zwischen dem mittleren Körper (420) und der Bodenplatte (413) angeordnet ist, sowie eine Ringdichtung (432) aufweist, die zwischen der Bodenplatte (413) und dem oberen Abschnitt des Schaftes (2a) angeordnet ist, auf dem der zylindrische Abschnitt (415) aufgeschraubt ist, der die Bodenplatte (413) nach unten verlängert.

13. Vorrichtung nach irgendeinem der Ansprüche 1 bis 12, dadurch gekennzeichnet, daß0 sie beim Aufsetzen eines Rohrabzweigstückes (2) aus Polyethylen angewandt wird, das durch Heißversiegelung auf einer Polyethylen-Rohrleitung (1) befestigt wird.

## Claims

1. Apparatus for installing a saddle-shaped parallel connection tapping (2) on a pipe (1), in particular a pipe for distributing gas, the tapping being put into place from the top of a hole dug around the installation zone for the tapping (2), the apparatus comprising means for grasping the tapping and means for applying a determined clamping force between the tapping (2) and the pipe (1), in particular for the purpose of securing the tapping to the pipe during an operation of welding the tapping (2) to the pipe (1), the apparatus further comprising:
a) a frame (100) comprising a vertical support structure (110) provided with guide slideways (113, 114) and including both a set of telescopic legs (115) connected to the top portion of the structure (110) and a tipping thrust device (130) in the form of a spade placed at the bottom end of the structure (110) and designed to take up a position beneath the pipe (1) and capable of performing pivoting motion between a vertical rest position and a horizontal working position under the control of rodding from the top portion of the frame (100);
b) a removable tapping positioner (200) comprising a cylindrical column (205) that is split along one of its generator lines (206) and that is fitted at its bottom end with a disconnectable tapping support module (220) provided with means (225 to 228) for holding the rims (2d, 2e) of the tapping, the tapping positioner (200) including guide means (201, 202, 203) that co-operate with said guiding slideways (113, 114) during downwards insertion into the frame (100);
c) pressure-exerting means (140) mounted on the frame (100) to exert downwards pressure on the tapping support module (220) in selective manner as determined from the top of the frame;
d) means (251 to 254) mounted on the removable tapping support module (220) for securing the tapping (2) to the pipe (1);
e) a removable driver device (300) adapted to be inserted laterally into the tool-positioning column (205) and provided with guide means (303) inside said tool-positioning column (205); and
f) a removable perforator device (400) adapted to be inserted laterally into the tool-positioning column (205) and provided with guide means (410) inside said tool-positioning column (205); and
g) means (217 to 219, 230) mounted on the tapping positioner (200) for remotely controlling release of said tapping-retaining means (225-228).

2. Apparatus according to claim 1, characterised in that a first V-shaped support (131) is disposed on the spade (130) to bear against the bottom portion of the pipe (1) and in that upside-down V-shaped supports (123, 124) are adjustably mounted on the frame structure (100) to be placed against the top portion of the pipe (1) on either side of the tapping that is to be installed (2).

3. Apparatus according to claim 1 or claim 2, characterised in that the pressure means (140) mounted on the frame (100) comprise pivoting fingers (141, 142) that are controlled from the top by links (143) hinged on a vertical rod (144) and co-operating with wheels (215, 216) disposed at the bottom of the tool-positioning column (205).

4. Apparatus according to claim 3, characterised in that it further comprises means (146, 147) for locking the control means (143, 144) of the pivoting fingers (141, 142) and a rated spring (214) incorporated at the base of the tool-positioning column (205) for establishing a predetermined pressure on the tapping support module (210).

5. Apparatus according to any one of claims 1 to 4, characterised in that the means for holding the rims (2d, 2e) of the tapping (2) comprise parts (225 to 228) provided at their bottom ends with notches (228) designed to engage on the rims (2d, 2e) of the tapping (2), the parts being hinged at the top firstly to the fixed body (221) of the tapping support module (210) and secondly to spreaders (223, 224) that are themselves hinged to a structure (222) for controlling opening or closing of said hinged parts (225 to 228).

6. Apparatus according to claim 5, characterised in that the control structure (222) is held in its closure-controlling position for the hinged parts (225 to 228) by a sliding rod (230) provided with locking means (241) that can be unlocked from above by means of a control cable (217).

7. Apparatus according to any one of claims 1 to 6, characterised in that said means (251 to 254) for securing the tapping (2) to the pipe comprise welding receptacles (252) secured to the tapping (2), welding plugs (251) connectable to the welding receptacles (252) and connected by a cable (218) to a welding unit located outside the hole, and tabs (253, 254) secured to the module (220) and comprising a portion (254) disposed around a welding receptacle (252) and beneath the welding plug (251) so as to cause the welding plug (251) to be automatically disconnected when the tapping support module (220) is withdrawn after the tapping (2) has been put into place on a pipe (1).

8. Apparatus according to any one of claims 1 to 7, characterised in that said perforator device (400) comprises an internal rod (401) whose bottom end is connected to a removable extension (408) provided with an end (409) that co-operates with a punch (3) disposed in the column (2a) of a tapping (2) to be installed, and an external tube (403) concentric with the internal rod (401) and secured to a housing (410) surrounding the connection zone between the internal rod (401) and the removable extension (408).

9. Apparatus according to claim 8, characterised in that the coupling housing (410) of the perforator (400) is made of three portions and comprises a top outer case (411), a base plate (413) that is extended downwards by a cylindrical portion (415) provided with an inside thread for screwing onto an outside thread (2f) of the column (2a) of the tapping (2) to be installed, and a central body (420) that forms an abutment for the internal rod (401) of the perforator.

10. Apparatus according to claim 9, characterised in that the central body (420) of the coupling housing (410) includes a rocking pawl (425) that co-operates with a collar (406) secured to the internal rod (401) of the perforator (400) and with a notch (405) formed in the bottom portion (404) of said internal rod (401) situated beneath said collar (406) upstream from the removable extension (408).

11. Apparatus according to claim 9 or 10, characterised in that the central body (420) includes a stud (423) subjected to drive from a spring (424) for positioning said body on said base plate (413).

12. Apparatus according to any one of claims 9 to 11, characterised in that the perforator device (400) includes at least one lip gasket (431) interposed between the removable extension (408) and the central body (420), an O-ring (433) interposed between the central body (420) and the base plate (413), and an O-ring (432) interposed between the base plate (413) and the top portion of the column (2a) on which the cylindrical portion (415) extending the base plate (413) downwards is screwed.

13. Apparatus according to any one of claims 1 to 12, characterised in that it is applied to installing a parallel connection tapping (2) of polyethylene which is welded to a polyethylene pipe (1) by hot fusing.
